# EUROPÄISCHE PATENTSCHRIFT

(11) **EP 2 317 843 B1**
(45) Veröffentlichungstag und Bekanntmachung des Hinweises auf die Patenterteilung: **17.12.2014**
(21) Anmeldenummer: 08787553.0
(22) Anmeldetag: 28.08.2008
(51) Int. Cl.: A01M 23/30

(54) **Schlagfalle**
Snap trap
Piège à souris

(43) Veröffentlichungstag der Anmeldung: 11.05.2011
(73) Patentinhaber: Swissinno Solutions AG, 9000 St. Gallen (CH)
(72) Erfinder: JANCIC, Silvin, CH-5610 Villmergen (CH); WALSTAD, Dennis, Elburn 60119 (US); LE LAIDIER, Gabriel, CH-9000 St. Gallen (CH)
(74) Vertreter: Hepp Wenger Ryffel AG
(86) Internationale Anmeldenummer: PCT/EP2008/061324
(87) Internationale Veröffentlichungsnummer: WO 2010/022779

(56) Entgegenhaltungen:
- EP-A- 0 280 504
- GB-A- 873 008
- US-A- 1 501 384
- US-A- 4 245 423

## Beschreibung

Die Erfindung betrifft eine Schlagfalle für Mäuse, Ratten oder andere Kleintiere gemäss dem Oberbegriff von Anspruch 1.

Schlagfallen sind seit längerer Zeit bekannt und gebräuchlich. Gattungsmässig vergleichbare Schlagfallen sind beispielsweise aus der DE 20 348 45 oder der DE 821 877 bekannt geworden. Die Schlagfalle besteht aus einer Grundplatte, einem Schlagbügel, einer schwenkbaren Zunge als Auslöseteil und einem Sperrhebel zum Fixieren des Bügels in einer Bereitschaftsstellung. Der Bügel ist auf der Grundplatte schwenkbar gelagert und in einer Bereitschaftsstellung gegen die Federkraft einer Schenkelfeder vorspannbar. Die Zunge besteht - wie die Grundplatte - aus Holz. Die Zunge ist mit einem Haltebügel aus Draht bestückt, in welchen zum Spannen der Falle das vordere, freie Ende des Sperrhebels einbringbar ist. Da die bewegliche Zunge fest über eine Achse mit der Grundplatte verbunden ist, kann sie beispielsweise zum Reinigen der Köderaufnahme nicht entfernt werden. Ein weiterer Nachteil besteht darin, dass die Auslöseanordnung aus zwei Einzelteilen (d.h. Zunge, Haltebügel) besteht, wodurch die Falle verhältnismässig kompliziert aufgebaut ist. Sodann erfordert das Spannen der Falle ein gewisses Geschick und Fehlauslösungen beim Stellen der Falle können in der Praxis häufig vorkommen.

Es ist deshalb eine Aufgabe der vorliegenden Erfindung, die Nachteile des Bekannten zu vermeiden und insbesondere eine Schlagfalle zu schaffen, die sich durch eine optimierte Auslöseanordnung auszeichnet. Das Auslöseteil soll einfach und kostengünstig herstellbar sein. Die Auslöseanordnung soll einfach demontierbar sein und so eine einfache Reinigung ermöglichen.

Das Dokument US-A-1501384 offenbart eine Schlagfalle gemäß dem Oberbegriff des unabhängigen Anspruchs 1.

Diese Aufgaben werden mit einer Schlagfalle gelöst, die die Merkmale des Anspruchs 1 aufweist.

Die Schlagfalle enthält einen auf der Grundplatte gelagerten schwenkbaren Bügel. Der Bügel kann sich in der Schlagstellung in einem vorderen Bereich und in der Bereitschaftsstellung in einem hinteren Bereich der Grundplatte befinden. Der Schwenkbereich, vorgegeben durch die Bereitschaftsstellung einerseits und durch die Schlagstellung andererseits, kann etwa 180° betragen. Zum Spannen der Falle wird der Bügel aus der Schlagstellung (bzw. Ruhestellung) etwa um 180° geschwenkt und in der ausgeschwenkten Stellung mittels des Sperrhebels fixiert. In dieser Bereitschaftsstellung ist der Sperrhebel lösbar mit dem Auslöseteil verbunden. Bei einer Berührung des Auslöseteils z.B. durch eine Maus kann die Verbindung zwischen Sperrhebel und Auslöseteil aufgehoben werden, wodurch die Maus durch den zurückschwenkenden Bügel erschlagen wird. Dadurch, dass das Auslöseteil als einstückiger Formkörper ausgebildet ist, ergeben sich mehrere Vorteile. Einerseits ist ein derartiger Formkörper einfach und kostengünstig herstellbar. Die Köderaufnahme und das mit dem Sperrhebel zusammenwirkende Mittel zum Fixieren der Bereitschaftsstellung können am Auslöseteil angeformt sein und bestehen bevorzugt aus demselben Material.

Das Auslöseteil ist wippenartig auf der Grundplatte gelagert. Dieses wippenartige Auslöseteil kann aus einem ersten und einem zweitem Wippensegment bestehen, wobei zwischen erstem und zweiten Wippensegment eine Kante angeordnet ist, um die das Auslöseteil wippenartig bewegbar ist. Eine solche Wippe hat neben einer zuverlässigen Auslösung weiter den Vorteil, dass die Handhabung der Falle beim Stellen vereinfacht werden kann.

Besonders vorteilhaft kann es sein, wenn das Auslöseteil ein Berührungssensitives, erstes Wippensegment aufweist, das in der Schlagstellung bezogen auf eine Draufsicht vom Bügel umgeben ist. Mit dieser Anordnung ist eine hohe Effizienz hinsichtlich der Tötung von Mäusen oder anderen Kleintieren gewährleistet. Die Draufsicht ist dabei vorzugsweise durch eine Blickrichtung vorgegeben, die parallel zur Flächennormalen einer Oberseite der Grundplatte verläuft.

Besonders vorteilhaft kann es sein, wenn das Auslöseteil ein berührungssensitives, erstes Wippensegment aufweist und wenn der Bügel beim Übergang von der Bereitschaftsstellung in die Schlagstellung am ersten Wippensegment vorbeiführbar ist. Zur Lagerung des Auslöseteils auf einer Oberseite der Grundplatte kann ein Widerlager angeordnet sein. Durch die einfache Anbringung des Widerlagers an der Grundplatte kann der Herstellaufwand weiter gesenkt werden. Das Widerlager kann aus Draht bestehen. Weiterhin kann es vorteilhaft sein, wenn das Widerlager U-förmig ausgebildet ist. Das U-förmige Widerlager kann etwa parallel verlaufende Arme aufweisen, die in eine vorzugsweise aus Holz bestehende Grundplatte eindringen. Ein derartiges Widerlager kann beispielsweise durch einen Hammerschlag in eine Holzplatte eingebracht werden. Das U-förmige Widerlager kann weiterhin eine etwa rechteckige Konfiguration aufweisen, wobei es zwei Armen sowie einen diese verbindenden Steg enthalten kann.

Das Auslöseteil kann lösbar an der Grundplatte befestigt oder befestigbar sein. Diese Ausführungsform ermöglicht ein besonders einfaches Montieren und Demontieren der dem Auslöseteil zugeordneten Köderaufnahme. Besonders vorteilhaft kann es dabei sein, wenn das Auslöseteil mit dem Widerlager verrastet oder verrastbar ist. Eine solche Schnapp- oder Rastverbindung wirkt sich positiv auf die Handhabbarkeit der Falle aus. Die Rastverbindung kann beispielsweise durch den Steg des U-förmigen Widerlagers auf der einen Seite und durch am Auslöseteil angeformte Rastklinkenteile auf der anderen Seite vorgegeben sein.

Das Auslöseteil weist einen Angriffsabschnitt auf, gegen den ein freies Ende des Sperrhebels zum Vorgeben der Bereitschaftsstellung abstützbar ist. Der Angriffsabschnitt ist dabei mit einer Hinterschneidung versehen .

Die Hinterschneidung ermöglicht eine relativ sichere provisorische Verbindung zwischen Sperrhebel und Auslöseteil in der Bereitschaftsstellung. Ein weiterer Vorteil dieser Anordnung ist, dass die Bereitschaftsstellung einfach und mit wenigen Handgriffen erreichbar ist, da die beiden miteinander korrespondierenden Komponenten des Auslösemechanismus rastend miteinander verbindbar sind. Eine derartige Ausgestaltung des Auslösemechanismus kann selbstverständlich auch in Kombination mit konventionellen Mausefallen vorteilhaft sein.

Das Aulöseteil weist eine Vertiefung auf, in die der Sperrhebel einführbar ist. Der in die Vertiefung eingeführte Teil des Sperrhebels liegt somit nicht frei. Er ist gewissermassen "versteckt", wodurch die Unfallgefahr erheblich reduziert werden kann. Die Vertiefung erstreckt sich in einer durch den Sperrhebel vorgegebenen Längsrichtung bis zu einem Ende, wobei an diesem Ende der Angriffsabschnitt für den Sperrhebel angeordnet ist. Die Vertiefung ist dabei kanalartig ausgebildet. Die Vertiefung kann im zweiten Wippensegment des Auslöseteils angeordnet sein.

Das Federelement kann eine Schenkelfeder mit einem schraubenförmigen Abschnitt sein. Dabei kann es vorteilhaft sein, wenn das zweite Wippensegment eine Ausnehmung aufweist, in die der schraubenförmige Abschnitt aufnehmbar ist. Diese Ausnehmung kann derart ausgebildet sein, dass das zweite (bzw. hintere) Wippensegment den schraubenförmigen Abschnitt in jeder Stellung übergreift, wodurch die wippenartige Kippbewegung des Auslöseteils nicht gestört wird.

In herstellungstechnischer Hinsicht sowie aus hygienischen Gründen kann es vorteilhaft sein, wenn das Auslöseteil aus Kunststoff besteht. Zusätzlich kann es vorteilhaft sein, wenn die Grundplatte aus Holz oder ebenfalls aus Kunststoff besteht.

Eine vorteilhafte Serienfertigung lässt sich erreichen, wenn das Auslöseteil ein Spritzgussteil aus Kunststoff ist.

Die Grundplatte kann aus einem einzigen Holzbauteil bestehen. Durch den Verzicht auf weitere Komponenten aus Holz lässt sich der Zusammenbau der Schlagfalle vereinfachen. Das Holzbauteil lässt sich einfach aus einem Holzbrett ausschneiden und muss nicht in grösserem Umfang weiter verarbeitet werden. Insbesondere sind keine weiteren Bohr- oder Fräsoperationen notwendig.

Die Effizienz der Falle lässt sich weiter erhöhen, wenn der Bügel und/oder ein der Schlagstellung des Bügels zugeordneter vorderer Bereich der Grundplatte sowie gegebenenfalls der einer Köderaufnahme zugeordnete Bereich des Auslöseteils (beispielsweise das erste Wippensegment) in einer Draufsicht bogenförmig und vorzugsweise etwa halbkreisförmig ausgebildet ist. Die Bogenform hat den Vorteil, dass Kleintiere nicht nur zentral von vorne, sondern auch bei einer mehr oder weniger seitlichen Annäherung relativ sicher erfasst werden können. Die Bogenform der Grundplatte kann auch ohne Verwendung des vorgängig beschriebenen einstückigen Formkörper-Auslöseteils für gattungsmässig vergleichbare Tierfallen Vorteile bringen.

Weitere Vorteile und Einzelmerkmale der Erfindung ergeben sich aus den Zeichnungen und aus der nachfolgenden Beschreibung von Ausführungsbeispielen. Es zeigen:
- Figur 1:: Eine perspektivische Darstellung einer erfindungsgemässen Schlagfalle für Mäuse, Ratten oder andere Kleintiere in einer Ruhe- bzw. Schlagstellung,
- Figur 2:: die Schlagfalle gemäss Figur 1 in Bereitschaftsstellung,
- Figur 3:: ein Auslöseteil der Schlagfalle gemäss Figur 1,
- Figur 4:: das Auslöseteil in einer Rückansicht, und
- Figur 5:: eine Draufsicht auf die Tierfalle gemäss Figur 1 ohne Auslöseteil.

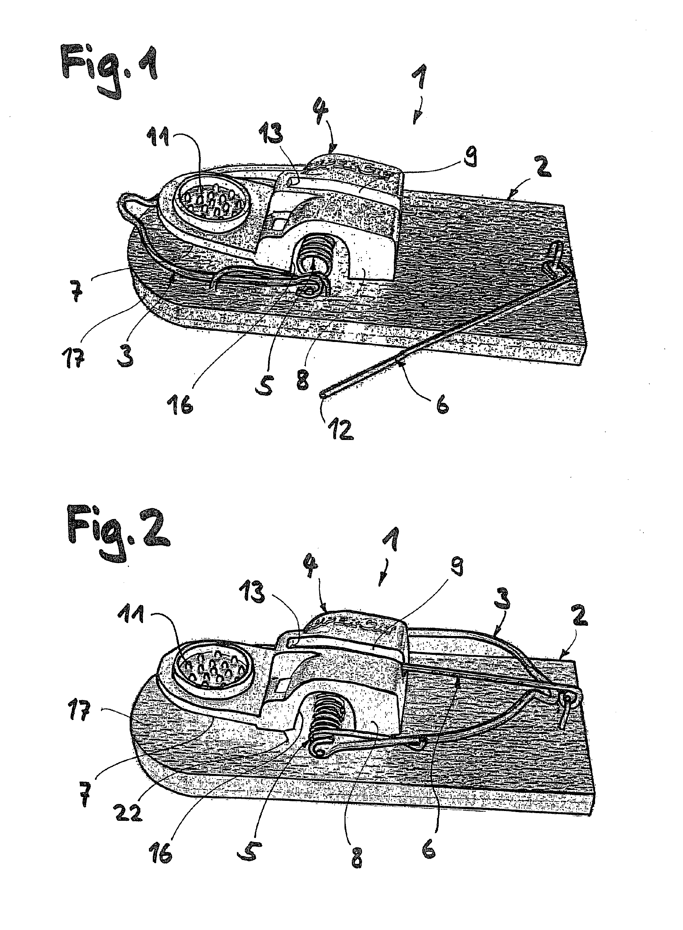

Figur 1 zeigt eine mit 1 bezeichnete Schlagfalle, mit der vor allem Mäuse auf vorteilhafte Art und Weise gefangen werden können. Die Schlagfalle eignet sich jedoch auch zum Fangen von Ratten oder anderen Kleintieren. Wie bei den bekannten klassischen Schlagfallen werden diese Kleintiere beim Zuschlagen eines Bügels getötet.

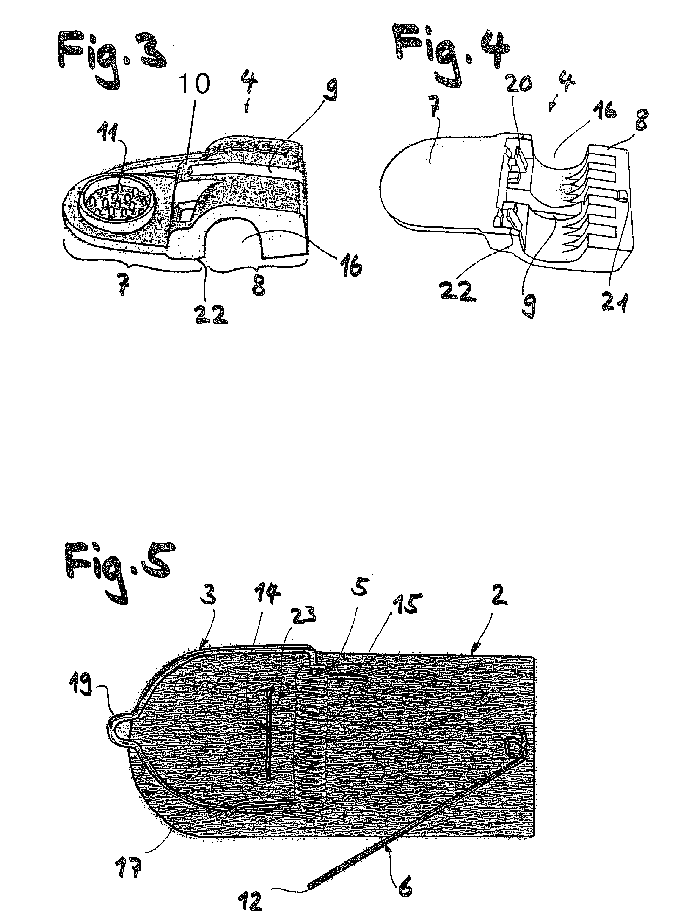

Die wesentlichen Komponenten der Schlagfalle 1 sind: eine Grundplatte 2, ein Bügel 3, ein Federelement 5, ein Auslöseteil 4 sowie ein Sperrhebel 6. Das Auslöseteil 4 besteht aus Kunststoff, die Grundplatte 2 besteht aus Holz, die übrigen Komponenten bestehen jeweils aus Draht. Beim Auslöseteil 4 handelt es sich vorzugsweise um ein Spritzgussteil aus Kunststoff. Dieser einstückige Formkörper bildet eine Art Wippe mit einem ersten (bzw. vorderen) Wippensegment 7 und einem zweiten (bzw. hinteren) Wippensegment 8. Wie Figur 2 zeigt, liegt das hintere Wippensegment 8 in der Bereitschaftsstellung auf der Grundplatte 2 auf, während das vordere Wippensegment 7 etwas von der Oberseite der Grundplatte wegragt. Durch diese Anordnung wird ein berührungssensitives Segment 8 geschaffen, das bei der Berührung durch eine sich annähernde Maus das vordere Segment 7 nach unten kippt. Gleichzeitig wird das hintere Segment 8 in einer Kippbewegung nach oben bewegt, wodurch die Falle ausgelöst wird. Zur Lagerung des Auslöseteils 4 auf der Oberseite der Grundplatte 2 (hier nicht dargestelltes) ist ein Widerlager 14 angeordnet (vgl. aber Fig. 5). Die dem vorderen Wippensegment 7 zugeordnete Köderaufnahme 11 enthält eine Mehrzahl von noppenartigen Erhebungen zum Anbringen von Ködern.

In Figur 1 ist eine kanalartige Vertiefung 9 erkennbar, die sich in Längsrichtung bis zum dem vorderen Wippensegment 7 zugewandten Ende erstreckt. Dieses Ende bildet einen Angriffsabschnitt, der mit einer Hinterschneidung 13 versehen ist. Das freie Ende 12 des Sperrhebels 6 ist in der Bereitschaftsstellung am Angriffsabschnitt 10 abgestützt (vgl. Fig. 2). Die Hinterschneidung 13 verhindert dabei ein unbeabsichtigtes Auslösen der Schlagfalle. Durch die erfindungsgemässe Verwendung des wippenartigen Auslöseteils 4 und der Hinterschneidung 13 lässt sich die Bereitschaftsstellung einfach und mit wenigen Handgriffen erstellen. Der Sperrhebel 6 weist ein freies Ende 12 auf, der zum Vorgeben der Bereitschaftsstellung am Angriffsabschnitt des Auslöseteils 4 abstützbar ist. Der Angriffsabschnitt ist am hinteren Ende einer kanalartig ausgebildeten Vertiefung 9 angeordnet, die sich in einer durch den Sperrhebel 6 vorgegebene Längsrichtung bis zu diesem Ende erstreckt (vgl. Fig. 2). Beim Einführen des Sperrhebels 6 kann die lösbare Verbindung zwischen Auslöseteil und Sperrhebel automatisch durch Einrasten des Sperrhebels in die Vertiefung 9 mit der Hinterschneidung 13 erstellt werden. In Figur 2 ist eine mit 22 bezeichnete Kante erkennbar, um die das Auslöseteil 4 wippenartig bewegbar ist. Die Kante 22 teilt das Auslöseteil 4 in das erste Wippensegment 7 und das zweite Wippensegment 8 auf.

Figur 1 zeigt weiter, dass das berührungssensitive erste Wippensegment 7 in der Schlagstellung bezogen auf eine Draufsicht vom Bügel 3 umgeben ist. Der Bügel 3 ist beim Übergang von der Bereitschaftsstellung (Fig. 2) in die Schlagstellung (Fig. 1) am ersten Wippensegment 7 vorbeiführbar. Das zweite Wippensegment 8 weist eine Ausnehmung 16 auf, in die ein schraubenförmige Abschnitt 15 des Federelements 5 aufnehmbar ist. Der Bügel 3 und der der Schlagstellung des Bügels zugeordnete vordere Bereich 17 der Grundplatte 2 sowie der der Köderaufnahme zugeordnete Bereich 7 des Auslöseteils 4 sind in der Draufsicht bogenförmig, insbesondere etwa halbkreisförmig ausgebildet.

Wie etwa aus Figur 2 hervorgeht, handelt es sich beim Federelement 5 - wie bei den klassischen Schlagfallen - um eine Schenkelfeder (siehe aber auch nachfolgende Fig. 5). Die Schenkelfeder weist einen schraubenförmigen Abschnitt 15 auf, der in einer Ausnehmung 16 des Auslöseteils 4 aufgenommen ist. Der Bügel 3 ist mit dem Federelement 5 derart verbunden, dass er in der Bereitschaftsstellung gegen die Federkraft des Federelements vorgespannt ist. Der Sperrhebel 6 ist am hinteren Ende der Grundplatte 2 an der Falle - analog zu klassischen Schlagfallen - angelenkt.

Die Figuren 3 und 4 zeigen das Auslöseteil in einer Vorder- und einer Rückansicht. Das Auslöseteil 4 ist mit dem Widerlager 14 verrastet oder verrastbar. Figur 4 zeigt am Auslöseteil angeformte Rastklinkenteile 20, die zum Erstellen einer Rastverbindung mit einem Steg eines U-förmigen Widerlagers zusammenwirken (vgl. Fig. 5).

Wie Figur 5 zeigt, ist der Bügel in der Draufsicht etwa halbkreisförmig ausgebildet, wobei mittig ein gegenüber dem Halbkreis vorragender U-Abschnitt 19 am Bügel 3 angeformt ist. Der U-Abschnitt 19 ragt in der Ruhestellung, die der Schlagstellung entspricht, über den bogenförmigen vorderen Bereich der Grundplatte 2, wodurch der Bügel 2 einfach erfasst und umgeklappt bzw. gespannt werden kann. Die Grundplatte 2 besteht ersichtlicherweise aus einem einzigen Holzbauteil. Weiter ist in Figur 5 ein Widerlager 14 erkennbar, das zur Lagerung des Auslöseteils dient. Das Widerlager 14 besteht aus Draht und ist auf der Oberseite der Grundplatte 2 angeordnet. Das Widerlager 14 ist U-förmig ausgebildet und weist etwa parallel verlaufende Arme (hier nicht erkennbar) und einen diese verbindenden Steg 23 auf, die in die aus Holz bestehende Grundplatte 2 eindringen. Der Steg 23 dient als Gegenstück für die Rastklinkenteile des Auslöseteils.

## Patentansprüche

1. Schlagfalle (1) für Mäuse, Ratten oder andere Kleintiere mit einem zwischen einer Schlagstellung und einer Bereitschaftsstellung schwenkbaren Bügel (3), der auf einer Grundplatte (2) gelagert und der in der Bereitschaftsstellung gegen die Federkraft eines Federelements (5) vorgespannt oder vorspannbar ist, und mit einem Sperrhebel (6), der zum Fixieren des Bügels (3) in der Bereitschaftsstellung mit einem eine Köderaufnahme (11) enthaltenden Auslöseteil (4) lösbar verbindbar ist, wobei das Auslöseteil (4) als einstückiger Formkörper ausgebildet und wippenartig auf der Grundplatte gelagert ist, wobei das Auslöseteil (4) einen Angriffsabschnitt (10) aufweist, gegen den ein freies Ende (12) des Sperrhebels (6) zum Vorgeben der Bereitschaftsstellung abstützbar ist, **dadurch gekennzeichnet, dass** das Auslöseteil (4) eine kanalartig ausgebildete Vertiefung (9) aufweist, in die der Sperrhebel (6) einführbar ist, und dass die Vertiefung (9) sich in einer durch den Sperrhebel vorgegebene Längsrichtung bis zu einem Ende erstreckt, wobei der Angriffsabschnitt (10) für den Sperrhebel (6) am Ende angeordnet ist und mit einer Hinterschneidung (13) versehen ist.

2. Schlagfalle nach Anspruch 1, **dadurch gekennzeichnet, dass** das Auslöseteil (4) ein berührungssensitives, erstes Wippensegment (7) aufweist, das in der Schlagstellung bezogen auf eine Draufsicht vom Bügel (3) umgeben ist.

3. Schlagfalle nach Anspruch 1 oder 2, **dadurch gekennzeichnet, dass** das Auslöseteil (4) ein berührungssensitives, erstes Wippensegment (7) aufweist und dass der Bügel beim Übergang von der Bereitschaftsstellung in die Schlagstellung am ersten Wippensegment (7) vorbeiführbar ist.

4. Schlagfalle nach einem der Ansprüche 1 bis 3, **dadurch gekennzeichnet, dass** zur Lagerung des Auslöseteils (4) auf einer Oberseite der Grundplatte (2) ein Widerlager (14) angeordnet ist.

5. Schlagfalle nach Anspruch 4, **dadurch gekennzeichnet, dass** das Widerlager (14) aus Draht besteht.

6. Schlagfalle nach Anspruch 4 oder 5, **dadurch gekennzeichnet, dass** das Widerlager (14) U-förmig ausgebildet ist.

7. Schlagfalle nach Anspruch 6, **dadurch gekennzeichnet, dass** das U-förmige Widerlager (14) etwa parallel verlaufende Arme aufweist, die in eine vorzugsweise aus Holz bestehende Grundplatte (2) eindringen.

8. Schlagfalle nach einem der Ansprüche 1 bis 7, **dadurch gekennzeichnet, dass** das Auslöseteil (4) lösbar an der Grundplatte (2) befestigt oder befestigbar ist.

9. Schlagfalle nach einem der Ansprüche 4 bis 7, **dadurch gekennzeichnet, dass** das Auslöseteil (4) mit dem Widerlager (14) verrastet oder verrastbar ist.

10. Schlagfalle nach einem der Ansprüche 1 bis 9, **dadurch gekennzeichnet, dass** das Auslöseteil (4) ein zweites Wippensegment (8) aufweist, in dem die Vertiefung (9) angeordnet ist.

11. Schlagfalle nach Anspruch 10, **dadurch gekennzeichnet, dass** das Federelement (5) eine Schenkelfeder enthaltend einen schraubenförmigen Abschnitt (15) ist und dass das zweite Wippensegment (8) eine Ausnehmung (16) aufweist, in die der schraubenförmige Abschnitt (15) aufnehmbar ist.

12. Schlagfalle nach einem der Ansprüche 1 bis 11, **dadurch gekennzeichnet, dass** das Auslöseteil (4) aus Kunststoff besteht und die Grundplatte (2) aus Holz oder Kunststoff besteht.

13. Schlagfalle nach einem der Ansprüche 1 bis 12, **dadurch gekennzeichnet, dass** das Auslöseteil (4) ein Spritzgussteil aus Kunststoff ist.

14. Schlagfalle nach einem der Ansprüche 1 bis 13, **dadurch gekennzeichnet, dass** die Grundplatte (2) aus einem einzigen Holzbauteil besteht.

15. Schlagfalle nach einem der Ansprüche 1 bis 14, **dadurch gekennzeichnet, dass** der Bügel (3) und/oder ein der Schlagstellung des Bügels zugeordneter vorderer Bereich (17) der Grundplatte (2) sowie gegebenenfalls der einer Köderaufnahme zugeordnete Bereich des Auslöseteils (4), in einer Draufsicht bogenförmig und vorzugsweise etwa halbkreisförmig ausgebildet ist.

## Claims

1. Snap trap (1) for mice, rats or other small animals with a bar (3) which can pivot between a striking position and a readiness position, is mounted on a base plate (2) and is or can be pretensioned against the spring force of a spring element (5) in the readiness position, and with a locking lever (6) which can be detachably connected to a triggering part (4) containing a bait holder (11) to fix the the bar (3) in the readiness position, the triggering part (4) being formed as a one-piece molding and being mounted on the base plate in the manner of a rocker, the triggering part (4) having an engagement section (10) against which a free end (12) of the locking lever (6) can be braced to determine the readiness position, **characterized in that** the triggering part (4) has a depression (9) designed in the manner of a channel into which the locking lever (6) can be introduced and **in that** the depression (9) extends in a longitudinal direction determined by the locking lever as far as one end, the engagement section (10) for the locking lever (6) being arranged at the end and being provided with an undercut (13).

2. Snap trap as claimed in Claim 1, **characterized in that** the triggering part (4) has a touch-sensitive first rocker segment (7) that in the striking position is surrounded by the bar (3) when viewed from above.

3. Snap trap as claimed in Claim 1 or 2, **characterized in that** the triggering part (4) has a touch-sensitive first rocker segment (7) and that, when the bar passes from the readiness position into the striking position, it can be guided past the first rocker segment (7).

4. Snap trap as claimed in one of Claims 1 to 3, **characterized in that** a bearing (14) is arranged for mounting the triggering part (4) on an upper side of the base plate (2).

5. Snap trap as claimed in Claim 4, **characterized in that** the bearing (14) is made of wire.

6. Snap trap as claimed in Claim 4 or 5, **characterized in that** the bearing (14) is U-shaped in design.

7. Snap trap as claimed in Claim 6, **characterized in that** the U-shaped bearing (14) has arms which run approximately parallel to each other and are embedded in a base plate (2) that preferably is made of wood.

8. Snap trap as claimed in one of Claims 1 to 7, **characterized in that** the triggering part (4) is or can be fastened detachably to the base plate (2).

9. Snap trap as claimed in one of Claims 4 to 7, **characterized in that** the triggering part (4) is or can be latched onto the bearing (14).

10. Snap trap as claimed in one of Claims 1 to 9, **characterized in that** the triggering part (4) has a second rocker segment (8) in which the depression (9) is arranged.

11. Snap trap as claimed in Claim 10, **characterized in that** the spring element (5) is a leg spring containing a spiral section (15) and that the second rocker segment (8) has a recess (16) in which the spiral section (15) can be accommodated.

12. Snap trap as claimed in one of Claims 1 to 11, **characterized in that** the triggering part (4) is made of plastic and the base plate (2) is made of plastic or wood.

13. Snap trap as claimed in one of Claims 1 to 12, **characterized in that** the triggering part (4) is a plastic injection-molded part.

14. Snap trap as claimed in one of Claims 1 to 13, **characterized in that** the base plate (2) consists of a single wooden part.

15. Snap trap as claimed in one of Claims 1 to 14, **characterized in that** the bar (3) and/or a front region (17) of the base plate (2) that is associated with the striking position of the bar as well as, optionally, that region of the triggering part (4) associated with a bait holder is curved in design, and is preferably approximately semicircular, when viewed from above.

## Revendications

1. Piège à souris (1) pour souris, rats et autres petits animaux, comprenant un étrier (3) pouvant pivoter entre une position de percussion et une position d'attente, lequel étrier est monté sur une plaque de base (2) et lequel étrier est ou peut être précontraint à l'encontre de la force de ressort d'un élément ressort (5) dans la position d'attente, et comprenant un levier de blocage (6) qui peut être relié de manière amovible à une partie de déclenchement (4) contenant un logement pour appât (11) pour fixer l'étrier (3) dans la position d'attente, la partie de déclenchement (4) étant réalisée sous forme de corps moulé d'une seule pièce et étant montée de manière à pouvoir basculer sur la plaque de base, la partie de déclenchement (4) comprenant une portion d'engagement (10) contre laquelle peut s'appuyer une extrémité libre (12) du levier de blocage (6) pour prédéfinir la position d'attente, **caractérisé en ce que** la partie de déclenchement (4) comprend un renfoncement (9) réalisé en forme de canal, dans lequel le levier de blocage (6) peut être inséré, et **en ce que** le renfoncement (9) s'étend jusqu'à une extrémité dans une direction longitudinale prédéfinie par le levier de blocage, la portion d'engagement (10) pour le levier de blocage (6) étant agencée à l'extrémité et étant pourvue d'une contre-dépouille (13).

2. Piège à souris selon la revendication 1, **caractérisé en ce que** la partie de déclenchement (4) comprend un premier segment de bascule (7) sensible au toucher, qui est entouré par l'étrier (3) dans une vue de dessus dans la position de percussion.

3. Piège à souris selon la revendication 1 ou 2, **caractérisé en ce que** la partie de déclenchement (4) comprend un premier segment de bascule (7) sensible au toucher, et **en ce que** l'étrier peut être guidé devant le premier segment de bascule (7) lors de la transition de la position d'attente à la position de percussion.

4. Piège à souris selon l'une quelconque des revendications 1 à 3, **caractérisé en ce qu'**une butée (14) est agencée pour le montage de la partie de déclenchement (4) sur un côté supérieur de la plaque de base (2).

5. Piège à souris selon la revendication 4, **caractérisé en ce que** la butée (14) est constituée d'un fil métallique.

6. Piège à souris selon la revendication 4 ou 5, **caractérisé en ce que** la butée (14) est réalisée en forme de U.

7. Piège à souris selon la revendication 6, **caractérisé en ce que** la butée (14) en forme de U comprend des bras s'étendant approximativement parallèlement qui pénètrent dans une plaque de base (2) constituée de préférence de bois.

8. Piège à souris selon l'une quelconque des revendications 1 à 7, **caractérisé en ce que** la partie de déclenchement (4) est ou peut être fixée de manière amovible à la plaque de base (2).

9. Piège à souris selon l'une quelconque des revendications 4 à 7, **caractérisé en ce que** la partie de déclenchement (4) est ou peut être encliquetée avec la butée (14).

10. Piège à souris selon l'une quelconque des revendications 1 à 9, **caractérisé en ce que** la partie de déclenchement (4) comprend un deuxième segment de bascule (8) dans lequel est agencé le renfoncement (9).

11. Piège à souris selon la revendication 10, **caractérisé en ce que** l'élément ressort (5) est un ressort à branches comportant une portion hélicoïdale (15), et **en ce que** le deuxième segment de bascule (8) comprend un évidement (16) dans lequel la portion hélicoïdale (15) peut être logée.

12. Piège à souris selon l'une quelconque des revendications 1 à 11, **caractérisé en ce que** la partie de déclenchement (4) est constituée de plastique et la plaque de base (2) est constituée de bois ou de plastique.

13. Piège à souris selon l'une quelconque des revendications 1 à 12, **caractérisé en ce que** la partie de déclenchement (4) est une pièce moulée par injection en plastique.

14. Piège à souris selon l'une quelconque des revendications 1 à 13, **caractérisé en ce que** la plaque de base (2) est constituée d'un seul composant en bois.

15. Piège à souris selon l'une quelconque des revendications 1 à 14, **caractérisé en ce que** l'étrier (3) et/ou une région avant (17), associée à la position de percussion de l'étrier, de la plaque de base (2) ainsi qu'éventuellement la région de la partie de déclenchement (4) associée à un logement d'appât est/sont réalisé(e)(s) sous forme arquée et de préférence sous forme approximativement semi-circulaire en vue de dessus.
